# EUROPEAN PATENT SPECIFICATION

(11) **EP 3 828 651 B1**
(45) Date of publication and mention of the grant of the patent: **26.04.2023**
(21) Application number: 20209846.3
(22) Date of filing: 25.11.2020
(51) Int. Cl.: G05B 13/02

(54) **APPARATUS, METHOD AND PROGRAM**
VORRICHTUNG, VERFAHREN UND PROGRAMM
APPAREIL, PROCÉDÉ ET PROGRAMME

(30) Priority: 26.11.2019 JP 2019213293
(43) Date of publication of application: 02.06.2021
(73) Proprietor: YOKOGAWA ELECTRIC CORPORATION, Musashino-shi Tokyo 180-8750 (JP)
(72) Inventor: TAKAMI, Go, Musashino-shi, Tokyo, 180-8750 (JP)
(74) Representative: Winter, Brandl - Partnerschaft mbB

(56) References cited:
- EP-A2- 2 924 570
- US-A1- 2010 070 098
- US-A1- 2018 354 125
- US-A1- 2019 042 979
- JIASHENG ZHANG ET AL: "Structural research of fuzzy PID controllers", CONTROL AND AUTOMATION, 2005. ICCA '05. INTERNATIONAL CONFERENCE ON BUDAPEST, HUNGARY 26-29 JUNE 2005, PISCATAWAY, NJ, USA,IEEE, vol. 2, 26 June 2005 (2005-06-26), pages 1248-1253, XP010849936, DOI: 10.1109/ICCA.2005.1528312 ISBN: 978-0-7803-9137-6

## Description

The present invention relates to an apparatus, a method, and a program.

Conventionally, a variety of methods for controlling a device are proposed (for example, see JP 2018-202564 A.

Also, document US 2019/042979 A1 relates to thermal self-learning with reinforcement learning agent, wherein a semiconductor package apparatus may include technology to learn thermal behavior information of a system based on input information including one or more of processor information, thermal information, and cooling information, and provide information to adjust one or more of a parameter of a processor and a parameter of a cooling subsystem based on the learned thermal behavior information and the input information. Other embodiments are disclosed and claimed.

Document EP 2 924 570 A1 relates to Cloud-level control loop tuning analytics, wherein a control loop tuning system executing on a cloud platform facilitates remote control system analysis and generation of suitable controller gains for a given closed-loop control application. The system leverages cloud-side analytics and a gain correlation model generated based on historical data collected from the industrial control system and maintained on cloud storage. The gain correlation model creates a virtual association between controller gains and process variables based on operational and configuration data collected from the industrial control system. The system then applies iterative analytics to the model to converge on a set of controller gains determined to satisfy an optimization criterion. Recommended controller gains are then provided to a client device for review and implementation in the real system controller.

And, JIASHENG ZHANG ET AL: "Structural research of fuzzy PIO controllers", CONTROL AND AUTOMATION, 2005. ICCA '05. INTERNATIONAL CONFERENCE ON BUDAPEST, HUNGARY 26-29 JUNE 2005, PISCATAWAY, NJ, USA,IEEE, vol. 2, 26 June 2005 (2005-06-26), pages 1248-1253, XP010849936, relates to constructing a fuzzy PID auto-tuner using control designs providing a set of gains for a controller at each operating condition.

However, in recent years, there is an increasing demand for controlling a device more appropriately.

To solve the above-mentioned problem, an apparatus as defined in claim 1, a method as defined in claim 12 and a program as defined in claim 13 are provided. Advantageous further developments of the invention are subject of the accompanying dependent claims.

A first aspect of the present invention provides an apparatus for learning processing. The apparatus comprises: a first acquisition unit for acquiring measurement data measured by a sensor; a control parameter acquisition unit configured to acquire a control parameter indicating a control content of each device to be controlled; a reward value acquisition unit configured to acquire a reward value used for reinforcement learning in the learning processing unit, wherein the reward value is determined by a preset reward function in response to input of the measurement data; a first model configured to output a recommended control parameter indicating a first type of control content recommended for increasing the reward value in response to input of the measurement data; a first learning processing unit configured to execute a learning processing of the first model by using the reward value and by using learning data including the measurement data acquired by the first acquisition unit and the control parameter acquired by the control parameter acquisition unit; a first recommended control parameter acquisition unit for acquiring the recommended control parameter output from the first model in response to the supply of the measurement data to the first model; and a first control unit for controlling at least one device to be controlled by using the recommended control parameter acquired by the first recommended control parameter acquisition unit. The first acquisition unit is further configured to acquire each of a first group of measurement data including at least one type of measurement data and a second group of measurement data including at least one type of measurement data; and the reward function used in the first learning processing unit is configured to: set the reward value to 0 when at least one of the first group of the measurement data does not satisfy a reference condition, and increase or decrease the reward value according to each value of the second group of the measurement data when each of the first group of the measurement data satisfies the reference condition.

The apparatus may further include a first supply unit for supplying the measurement data acquired by the first acquisition unit to the first model. The apparatus may further include a first recommended control parameter acquisition unit for acquiring the recommended control parameter outputted from the first model in response to the supply of the measurement data to the first model. The apparatus may further include a first control unit for controlling the at least one device to be controlled by using the recommended control parameter acquired by the first recommended control parameter acquisition unit. The first type of control content may be an output value of each device to be controlled. The first acquisition unit may be configured to acquire the measurement data indicating a physical quantity that may act as a disturbance to the at least one device to be controlled. The first acquisition unit may be configured to acquire the measurement data indicating a consumption of at least one of energy or raw material by a facility including the at least one device to be controlled.

In a system comprising: a plurality of devices to be controlled; at least one sensor; at least one controller for performing feedback control of the devices to be controlled; and the apparatus according to the above first aspect or the apparatus according to the above first aspect and further including the first supply unit for supplying the measurement data acquired by the first acquisition unit to the first model, each device to be controlled may be controlled by any feedback control of P control, PI control, PD control, and PID control. The first type of control content may be a target value of the feedback control.

In said system, each device to be controlled may be controlled by any feedback control of PI control, PD control, and PID control, wherein the first type of control content may be a piece of identification information of a gain set used for the feedback control among pieces of identification information preassociated with each gain set including a value of a proportional gain and at least one of a value of an integral gain or a value of a derivative gain of the feedback control.

In said system, each device to be controlled may be controlled by any feedback control of P control, PI control, PD control, and PID control. The first type of control content may be at least one of a value of a proportional gain, a value of an integral gain, or a value of a derivative gain of the feedback control.

In said system, the apparatus may further include a second acquisition unit for acquiring measurement data measured by a sensor. The apparatus may further include a second model configured to output a recommended control parameter indicating the second type of control content recommended for increasing the reward value in response to input of measurement data, wherein the second type of control content is a target value of the feedback control. The apparatus may further include a second learning processing unit configured to execute a learning processing of the second model by using the reward value and by using learning data including the measurement data acquired by the second acquisition unit and the control parameter indicating the second type of control content of the at least one device to be controlled.

In said system, the apparatus may further include a second supply unit for supplying the measurement data acquired by the second acquisition unit to the second model. The apparatus may further include a second recommended control parameter acquisition unit for acquiring the recommended control parameter outputted from the second model in response to the supply of the measurement data to the second model. The apparatus may further include a second control unit for controlling the at least one device to be controlled by using the recommended control parameter acquired by the second recommended control parameter acquisition unit.

A second aspect of the present invention provides a method for a learning processing. The method comprises: acquiring, by a first acquisition unit, measurement data measured by a sensor; acquiring, by a control parameter acquisition unit, a control parameter indicating a control content of each device to be controlled; outputting, by a first model, a recommended control parameter indicating the first type of control content recommended for increasing a reward value in response to input of measurement data; controlling, by a first control unit, the at least one device to be controlled by using the recommended control parameter; acquiring, by a reward value acquisition unit, a reward value used for reinforcement learning in the learning processing unit, wherein the reward value is determined by a preset reward function in response to input of the measurement data; executing, by a first learning processing unit, a learning processing of the first model by using the reward value and by using learning data including the measurement data acquired by the first acquisition unit and the control parameter acquired by the control parameter acquisition unit. The method further comprises acquiring, by the first acquisition unit, each of a first group of measurement data including at least one type of measurement data and a second group of measurement data including at least one type of measurement data; wherein the reward function used in the first learning processing unit is configured to: set the reward value to 0 when at least one of the first group of the measurement data does not satisfy a reference condition, and increase or decrease the reward value according to each value of the second group of the measurement data when each of the first group of the measurement data satisfies the reference condition.

A third aspect of the present invention provides a program comprising instructions which, when the program is executed by the apparatus as described above, cause the apparatus to carry out the above described method.

The summary clause does not necessarily describe all necessary features of the embodiments of the present invention. The present invention may also be a sub-combination of the features described above.
Fig. 1 shows a system 1 according to an embodiment of the present invention.
Fig. 2 shows operations at a learning phase of the apparatus 4 according to an embodiment of the present invention.
Fig. 3 shows operations at a running phase of the apparatus 4 according to an embodiment of the present invention.
Fig. 4 shows an application example (1) of the system 1.
Fig. 5 shows an application example (2) of the system 1.
Fig. 6 shows an application example (3) of the system 1.
Fig. 7 shows a system 1A according to a variation.
Fig. 8 shows an example of a computer 2200 in which aspects of the present invention may be wholly or partly embodied.

Hereinafter, the present invention is described through the embodiments of the invention. However, the embodiments described below do not limit the invention defined in the claims. In addition, not all combinations of features described in the embodiments are necessarily essential to solving means of the invention.

### [1. Configuration of a system 1]

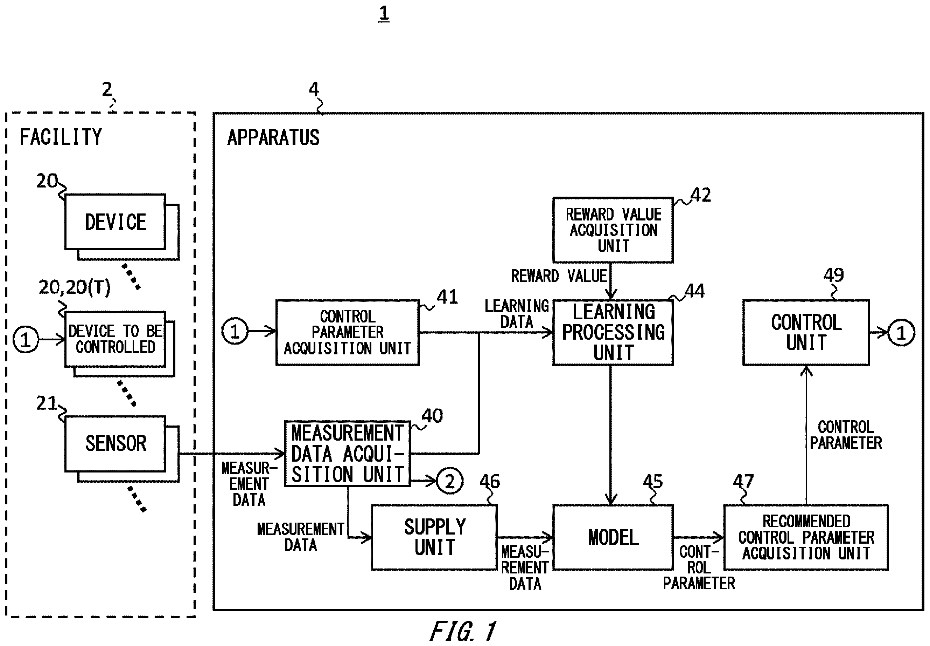

Fig. 1 shows a system 1 according to an embodiment of the present invention. The system 1 includes a facility 2 and an apparatus 4.

### [1-1. Facility 2]

The facility 2 is equipped with a plurality of devices 20. For example, the facility 2 may be a plant or a composite apparatus in which the plurality of devices 20 are combined. Examples of the plant include, besides an industrial plant such as a chemical plant or a biological plant, a plant for managing and controlling a wellhead or its surrounding area of a gas field, an oil field or the like, a plant for managing and controlling power generation such as hydraulic power generation, thermal power generation and nuclear power generation, a plant for managing and controlling energy harvesting such as solar photovoltaic generation, wind power generation or the like, and a plant for managing and controlling water and sewerage, a dam or the like. In the present embodiment, as one example, the facility 2 has one or plurality of devices 20 and one or plurality of sensors 21.

### [1-1-1. Device 20]

Each device 20 is an instrument, a machine, or an apparatus and may be an actuator such as a valve, a pump, a heater, a fan, a motor, a switch for controlling at least one physical quantity such as a pressure, a temperature, a pH, a speed or flow rate in a process of the facility 2, for example.

In the present embodiment, as one example, the facility 2 is provided with a plurality of devices 20. Each device 20 may be of different types or at least two or more devices 20 among them may be of the same type.

Each device 20 may be controlled by a wired communication or wireless communication from outside via a network not shown or may be controlled manually. At least some devices 20 of the plurality of devices 20 may be a device to be controlled 20 (T) controlled by the apparatus 4. When the system 1 is provided with a plurality of devices to be controlled 20 (T), the plurality of devices to be controlled 20 (T) may have a relationship in which they are controlled in conjunction with each other (as one example, a master-servant relationship, a relationship in which they are not controlled independently). Moreover, each device to be controlled 20 (T) may be the same type of devices 20 or different types of devices 20.

Note that a controller not shown may be provided in each of at least some devices 20 of the plurality of devices 20.
That a controller is provided in the devices 20 may be that the controller is incorporated in the devices 20 or that the controller is externally connected to the devices 20. The controller may perform feedback control of the devices 20 to reduce the difference between a target value (set point) and a current value in response to setting of the target value. The feedback control may be any of PI control, PD control, and PID control or may be P control.

If any feedback control of the PI control, PD control, and PID control is performed, the controller may prestore, for each of a plurality of gain sets including a value of a proportional gain and at least one of a value of an integral gain or a value of a derivative gain, a piece of identification information for identifying the gain set (also referred to as a gain set ID), as one example. In this case, the controller may perform feedback control by using the value of each gain of the gain set corresponding to the gain set ID in response to input of the gain set ID.

The target value and the current value of the feedback control may indicate an output value itself by the device 20 (as one example, an opening of a valve) or may indicate a value affected by the output value (as one example, a flow rate of a fluid at downstream from the valve).

### [1-1-2. Sensor 21]

Each sensor 21 is configured to measure a physical quantity inside and outside of the facility 2. Each sensor 21 may supply measurement data obtained by measurement to the apparatus 4.

In the present embodiment, as one example, the facility 2 is provided with a plurality of sensors 21. A plurality of measurement data measured by the plurality of sensors 21 may include at least one of external environment data, feedback control data, operational condition data, or consumption data.

The external environment data indicates a physical quantity that may act as a disturbance to the device to be controlled 20 (T). For example, the external environment data may indicate a physical quantity (alternatively, its variation) that may act as a disturbance to a control parameter of the device to be controlled 20 (T). As one example, the external environment data may indicate a temperature or humidity of the outside air of the facility 2, sunshine, wind direction, air flow, precipitation, physical quantity changed by control of other devices 20, or the like. The external environment data may be used for detecting a disturbance.

The feedback control data indicates a physical quantity for performing feedback control of each device to be controlled 20 (T). The feedback control data may indicate an output value by each device to be controlled 20 (T) or may indicate a value changed by the output value.

The operational condition data indicates an operational condition as a result of controlling each device to be controlled 20 (T). The operational condition data may indicate a physical quantity that may be varied by control of each device to be controlled 20 (T) or may indicate an output value of each device to be controlled 20 (T). The operational condition data may be the same as the feedback control data.

The consumption data indicates a consumption of at least one of energy or raw material by the facility 2. The consumption data may indicate a consumption of electric power or fuel (as one example, LPG) as an energy consumption.

### [1-3. Apparatus 4]

The apparatus 4 is configured to perform learning for each device to be controlled 20 (T). The apparatus 4 may be one or plurality of computers and may be composed of a PC or the like. The apparatus 4 has a measurement data acquisition unit 40, a control parameter acquisition unit 41, a reward value acquisition unit 42, a learning processing unit 44, a model 45, a supply unit 46, a recommended control parameter acquisition unit 47, and a control unit 49.

### [1-3-1. Measurement data acquisition unit 40]

The measurement data acquisition unit 40 is one example of a first acquisition unit and is configured to acquire measurement data measured by the sensors 21. The measurement data acquisition unit 40 may acquire measurement data measured by each of the plurality of sensors 21 provided in the facility 2. The measurement data acquisition unit 40 may acquire measurement data indicating an average value of measured values during a control cycle of each device to be controlled 20 (T) by the apparatus 4, or may acquire measurement data indicating a measured value for each control interval (that is, a measured value at an ending timing the of the control cycle). In the present embodiment, as one example, the control cycle of each device to be controlled 20 (T) may be synchronized. The measurement data acquisition unit 40 may acquire measurement data from the sensors 21 or from an operator who has checked the sensors 21. The measurement data acquisition unit 40 may supply the acquired measurement data to the learning processing unit 44 and the supply unit 46.

### [1-3-2. Control parameter acquisition unit 41]

The control parameter acquisition unit 41 is configured to acquire a control parameter indicating a control content of each device to be controlled 20 (T). When the system 1 is provided with a plurality of devices to be controlled 20 (T), the control parameter may indicate a control content of each of the plurality of devices to be controlled 20 (T). While the control parameter acquisition unit 41 is configured to acquire a control parameter from the control unit 49 in the present embodiment as one example, it may acquire the control parameter from the operator or from each device to be controlled 20 (T). The control parameter acquisition unit 41 may supply the acquired control parameter to the learning processing unit 44.

In this context, the control content of each device to be controlled 20 (T) may be an output value of the device to be controlled 20 (T), or may be, when the device to be controlled 20 (T) is subjected to feedback control, its target value, or at least one of a value of a proportional gain, a value of an integral gain or a value of a derivative gain of the feedback control, or may be a gain set ID of a gain set used for the feedback control. The control parameter used in the learning processing unit 44 may indicate one type (also referred to as a first type) of control content among those types of control content.

### [1-3-3. Reward value acquisition unit 42]

The reward value acquisition unit 42 is configured to acquire a reward value used for reinforcement learning in the learning processing unit 44. The reward value may be a value for evaluating an operation condition of the facility 2 and may be a value determined by a preset reward function. In this context, a function is a map having a rule of one-to-one association of each element in a set to each element in another set, and may be a numerical formula or a table, for example.

The reward function may output a reward value obtained by evaluating a condition indicated by measurement data in response to input of the measurement data. The reward function may be set by an operator. The reward value acquisition unit 42 may acquire the reward value from the operator using the reward function or may acquire the reward value by inputting measurement data from the sensors 21 to the reward function. When the reward value acquisition unit 42 inputs the measurement data to the reward function, the reward function may be stored inside or outside of the apparatus 4.

### [1-3-4. Learning processing unit 44]

The learning processing unit 44 is one example of a first learning processing unit and is configured to execute a learning processing of the model 45 by using a learning data including measurement data acquired by the measurement data acquisition unit 40 and a control parameter acquired by the control parameter acquisition unit 41. The learning processing unit 44 may execute the learning processing of the model 45 by using a reward value from the reward value acquisition unit 42.

### [1-3-5. Model 45]

The model 45 is one example of a first model, and is configured to output a recommended control parameter indicating a control content recommended for increasing a reward value in response to input of measurement data. The recommended control parameter outputted from the model 45 may indicate the first type of control content described above. The control content for increasing a reward value may be, when setting a reward value (as one example, a reward value obtained by inputting measurement data at a predetermined time point to the reward function) corresponding to an operation condition of the facility 2 at the time point (as one example, at present) as a reference reward value, a control content in which the reward value becomes higher than the reference reward value. Such control content in which the reward value becomes higher is recommended as the control over the device to be controlled 20 (T) because the operation condition is improved compared to that at the present time point. However, the reference reward value may be a fixed value (as one example, a value obtained by subtracting a tolerance from the maximum value of the reward value).

### [1-3-6. Supply unit 46]

The supply unit 46 is one example of a first supply unit and is configured to supply measurement data acquired by the measurement data acquisition unit 40 to the model 45.

### [1-3-7. Recommended control parameter acquisition unit 47]

The recommended control parameter acquisition unit 47 is one example of a first recommended control parameter acquisition unit and is configured to acquire a recommended control parameter outputted from the model 45 in response to supply of measurement data to the model 45. The recommended control parameter acquisition unit 47 may supply the acquired recommended control parameter to the control unit 49.

### [1-3-8. Control unit 49]

The control unit 49 is one example of a first control unit and is configured to control each device to be controlled 20 (T) by using the recommended control parameter acquired by the recommended control parameter acquisition unit 47.

The control unit 49 may control each device to be controlled 20 (T) with a control content indicated by the recommended control parameter, by supplying the recommended control parameter to each device to be controlled 20 (T). When a controller is provided in each device to be controlled 20 (T), the control unit 49 may supply the recommended control parameter to the controller.

The control unit 49 may control each device to be controlled 20 (T) so that an output value of each device to be controlled 20 (T) is maintained within a control cycle. When the device to be controlled 20 (T) is subjected to feedback control, the control cycle may be longer than a cycle time of the feedback control.

Note that the control unit 49 may further perform control of each unit of the apparatus 4. For example, the control unit 49 may control learning of the model 45.

According to the system 1 described above, a learning processing of the model 45 is executed by using learning data including measurement data by the sensors 21 and a control parameter indicating the first type of control content of each device to be controlled 20 (T), and the model 45 outputs a recommended control parameter indicating the first type of control content recommended for increasing the reward value in response to input of the measurement data. Therefore, because a recommended control parameter that increases the reward value can be acquired by inputting measurement data, an appropriate recommended control parameter can be acquired without the need of trial and error by a skilled operator and the device to be controlled 20 (T) can be appropriately controlled.

Moreover, because measurement data indicating a physical quantity that may act as a disturbance to the device to be controlled 20 (T) is acquired, an appropriate recommended control parameter can be acquired even when the disturbance occurs.

Moreover, because measurement data indicating a consumption of at least one of energy or raw material by the facility 2 including the device to be controlled 20 (T) is acquired, an appropriate recommended control parameter according to the consumption can be acquired.

Moreover, because each device to be controlled 20 (T) is controlled by using a recommended control parameter outputted in response to supply of measurement data to the model 45, each device to be controlled 20 (T) can be automatically controlled by an appropriate control parameter without the need of trial and error by a skilled operator.

### [2. Operations]

### [2-1. Learning phase]

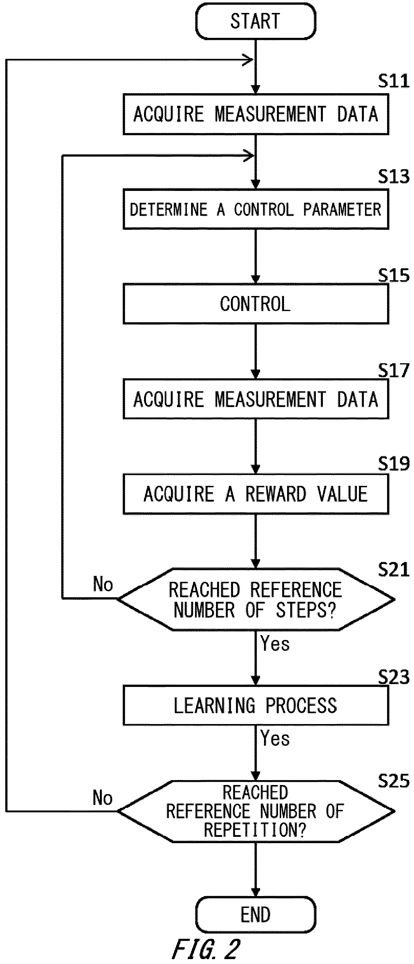

Fig. 2 shows operations at a learning phase of the apparatus 4 according to the present embodiment. The apparatus 4 is configured to execute learning of the model 45 while running the facility 2 by executing processes of Steps S11 to S25.

Firstly, in Step S11, the measurement data acquisition unit 40 acquires measurement data measured by each sensor 21. Thus, measurement data at an initial condition is acquired. The measurement data acquisition unit 40 may cause the learning processing unit 44 to store the measurement data.

In Step S13, the control unit 49 determines a control parameter indicating a control content of each device to be controlled 20 (T). The control unit 49 may determine a control parameter for the next control cycle and, in the present embodiment, as one example, may determine a control parameter to be used when Step S15 as described below is performed for the next time. The determined control parameter may be for increasing a reward value or for decreasing the reward value, or may be determined independently of the reward value. The control unit 49 may determine a control parameter according to an operation by an operator. Instead, the control unit 49 may determine a recommended control parameter outputted from the model 45 as a control parameter.

For example, when the process of Step S13 is firstly executed, the control unit 49 may determine a recommended control parameter outputted from the model 45 in response to input of the measurement data acquired in Step S11 to the model 45 as a control parameter for the next control cycle. When the processes of Steps S13 to S19 are repeated and the process of Step S13 is executed for multiple times, the control unit 49 may determine a recommended control parameter outputted from the model 45 in response to input of the measurement data acquired by the process of Step S17 lastly executed to the model 45 as the control parameter for the next control cycle. When the process of Step S13 is executed for multiple times, different control parameters may be determined during at least some processes among the plurality of processes of Step S13.

In Step S15, the control unit 49 controls each device to be controlled 20 (T) by outputting the control parameter to each device to be controlled 20 (T). The control unit 49 may cause the learning processing unit 44 to store the control parameter via the control parameter acquisition unit 41. The control unit 49 may cause the learning processing unit 44 to store the control parameter in association with measurement data acquired by the measurement data acquisition unit 40 before the control of each device to be controlled 20 (T). Thus, learning data including the measurement data and the control parameter is stored in the learning processing unit 44.

Note that, when the process of Step S15 is firstly executed, the measurement data acquired before the control of the device to be controlled 20 (T) may be measurement data acquired by the process of Step S11 described above. When the processes of Steps S13 to S19 are repeated and the process of Step S15 is executed for multiple times, the measurement data acquired before the control of the device to be controlled 20 (T) may be measurement data acquired by the process of Step S17 lastly executed.

In Step S17, the measurement data acquisition unit 40 acquires measurement data measured by each sensor 21. Thus, measurement data when each device to be controlled 20 (T) is controlled with a control content indicated by the control parameter is acquired.

In Step S19, the reward value acquisition unit 42 acquires a reward value determined by the reward function. In this context, measurement data acquired by the measurement data acquisition unit 40 may include a first group of measurement data and a second group of measurement data respectively, and each group of measurement data may include at least one type of measurement data. When at least one of measurement data of the first group does not satisfy a reference condition, the reward function may set a reward value to 0 independently of each value of measurement data of the second group. Moreover, when each of measurement data of the first group satisfies the reference condition, the reward function may increase or decrease the reward value according to each value of measurement data of the second group.

The first group of the measurement data may be operational condition data, and the reference condition of the first group of the measurement data may be a condition that should be achieved at minimum in the facility 2. For example, when the facility 2 is a manufacturing plant of a product such as a chemical product, the first group of the measurement data may indicate a temperature or humidity in the plant and the reference condition of the measurement data may be a temperature range or humidity range that should be maintained to keep quality of the product. Moreover, the second group of the measurement data may be consumption data. In this case, the greater the consumption is, the smaller the reward value may be. Thus, the learning processing is performed so that the consumption is reduced.

The reward value acquisition unit 42 may cause the learning processing unit 44 to store the acquired reward value. The reward value acquisition unit 42 may cause the learning processing unit 44 to store the reward value in association with the learning data stored by the process of Step S15 lastly executed.

In Step S21, the control unit 49 determines whether the processes of Steps S13 to S19 are executed as many times as a reference number of steps. When determined that the processes are not executed as many times as the reference number of steps (Step S21; No), the process shifts to Step S13. Thus, learning data between which at least one of measurement data or control parameters are different are sampled as many times as the reference number of steps and stored with the reward value. Note that, when the processes of Steps S13 to S19 are repeatedly executed, a cycle of Step S13 (that is, a control cycle) may be defined according to a time constant of the facility 2, and may be 5 minutes as one example. In Step S21, when determined that the processes are executed as many times as the reference number of steps (Step S21; Yes), the process shifts to Step S23.

In Step S23, the learning processing unit 44 executes a learning processing of the model 45 by respectively using a set of the learning data and the reward value stored in association with each other. Thus, the model 45 is updated. Note that the learning processing unit 44 may execute a learning processing by a known method such as gradient descent, neural network, DQN (Deep Q-Network), Gaussian process, deep learning. The learning processing unit 44 may execute a learning processing of the model 45 so that a control parameter that increases the reward value more is preferentially outputted as a recommended control parameter.

The model 45 after the learning processing may store a weight coefficient in association with the learning data including the measurement data and the control parameter. The weight coefficient may be set according to a level of the reward value when the control parameter in the corresponding learning data is used for the control, and may be used for predicting a reward value when the control parameter is used for the control.

In Step S25, the control unit 49 determines whether the processes of Steps S13 to S 23 are executed for a reference number of repetition (iteration). When determined that the processes are not executed for the reference number of repetition (Step S25; No), the process shifts to Step S11. When determined that the processes are executed for the reference number of iteration (Step S25; Yes), the process ends.

According to the operations described above, the reward function sets a reward value to 0 independently of each value of the second group of the measurement data when at least one of the first group of the measurement data does not satisfy a reference condition, and increase or decrease a reward value according to each value of the second group of the measurement data when each of the first group of the measurement data satisfies the reference condition. Thus, the learning processing of the model 45 can be executed so that a control parameter that increases the reward value on the premise that the first group of the measurement data satisfies the reference condition is preferentially outputted.

Moreover, when the recommended control parameter outputted from the model 45 is determined as a control parameter for the next control cycle, each device to be controlled 20 (T) is controlled according to the recommended control parameter and measurement data according to the control is acquired, so that the learning processing of the model 45 is executed by using learning data including the recommended control parameter and a reward value corresponding to the control result. Thus, the learning accuracy can be improved by sequentially executing a learning processing of the model 45 when the control is performed using the recommended control parameter.

### [2-2. Running phase]

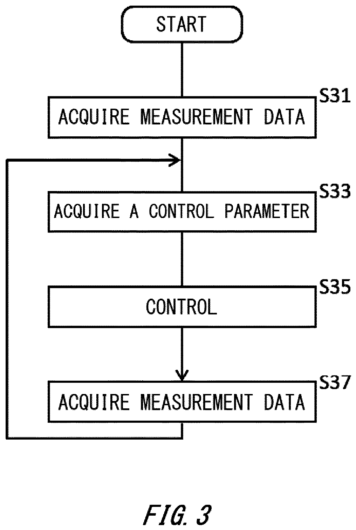

Fig. 3 shows operations at a running phase of the apparatus 4 according to the present embodiment. The apparatus 4 is configured to run the facility 2 using the model 45 by executing processes of Steps S31 to S37.

In Step S31, the measurement data acquisition unit 40 acquires measurement data measured by each sensor 21. Thus, measurement data at an initial condition is acquired. The measurement data may be supplied to the model 45 from the supply unit 46.

In Step S33, the recommended control parameter acquisition unit 47 acquires a recommended control parameter outputted from the model 45 in response to supply of the measurement data to the model 45. In this context, the model 45 is configured to output a recommended control parameter indicating a control content recommended for increasing the reward value. In the present embodiment, as one example, the model 45 may calculate, for each of control parameters included in the learning data, a reward value predicted when the control parameter is used for the control (also referred to as a predicted reward value).

The model 45 may calculate the predicted reward value for each control parameter indicating the same control content. For example, the model 45 may extract each learning data including a control parameter indicating one control content from a plurality of learning data. The model 45 may set the result of weight-adding each weight coefficient associated with each extracted learning data according to the distance between measurement data indicating a condition at the present time point (in the present embodiment, as one example, measurement data acquired by the process of Step S33 lastly executed) and measurement data in the learning data as the predicted reward value for the control parameter indicating the one control content. The model 45 may set a magnitude of the weighting so that, the greater the distance between the measurement data, the smaller the weight (that is, so that the effect on the reward value becomes smaller).

The model 45 may set a control parameter that has a higher predicted reward value more preferentially as a recommended control parameter. However, the model 45 may not necessarily set the control parameter that has the highest predicted reward value as the recommended control parameter.

In Step S35, the control unit 49 controls each device to be controlled 20 (T) by outputting the recommended control parameter to each device to be controlled 20 (T). Note that, in a case in which the device to be controlled 20 (T) is controlled by the recommended control parameter, when the control result deviates from a tolerance, the control unit 49 may change the recommended control parameter so that the control result is within the tolerance. For example, in a case in which the recommended control parameter indicates an output value of the device to be controlled 20 (T), when the output value exceeds an upper limit value (or falls below a lower limit value) of the manipulated variable, the control unit 49 may output a recommended control parameter indicating the upper limit value (or the lower limit value).

In Step S37, the measurement data acquisition unit 40 acquires measurement data measured by each sensor 21. Thus, the measurement data in a condition in which each device to be controlled 20 (T) is controlled with the recommended control parameter is acquired. When the process of Step S37 ends, the apparatus 4 may shift the process to Step S33.

According to the operations described above, each device to be controlled 20 (T) can be automatically controlled by an appropriate control parameter without the need of trial and error by a skilled operator.

### [3. Application example]

### [3-1. Application example (1)]

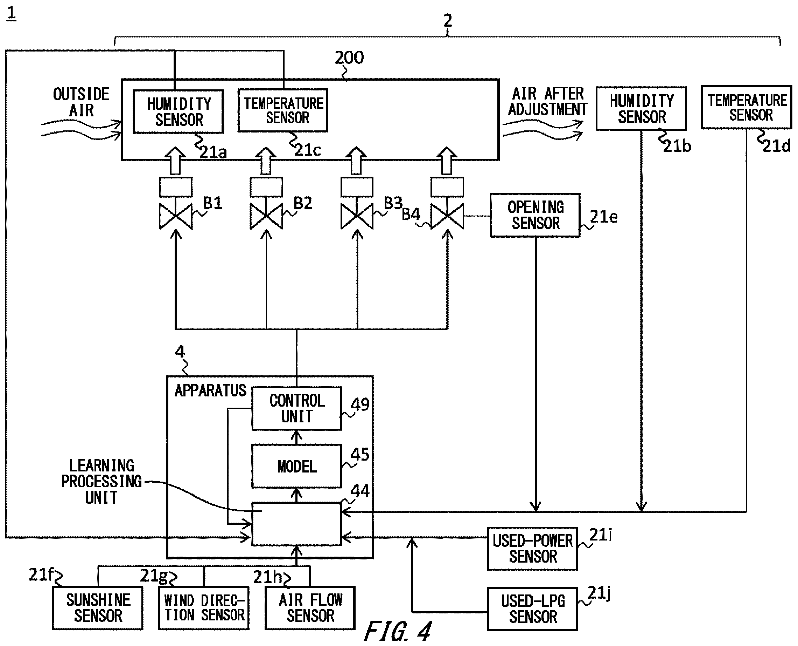

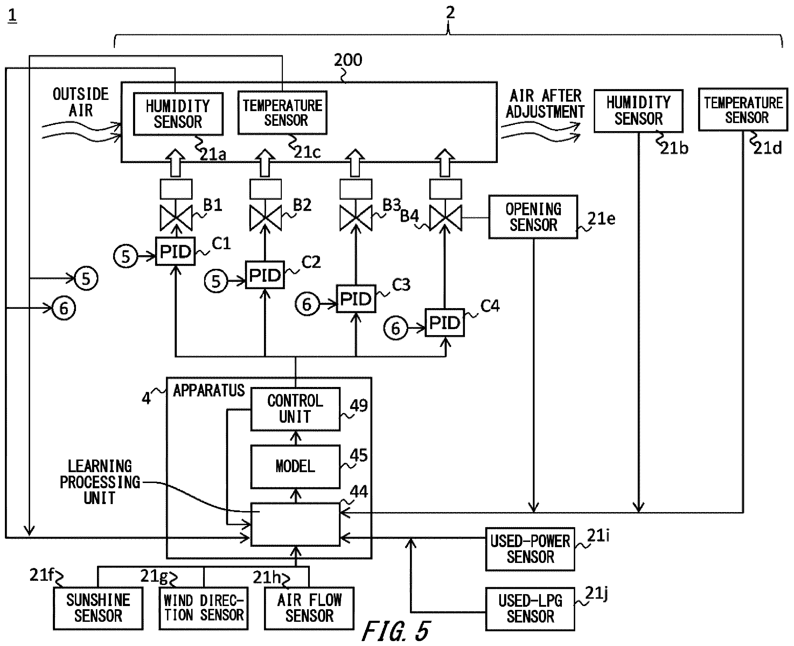

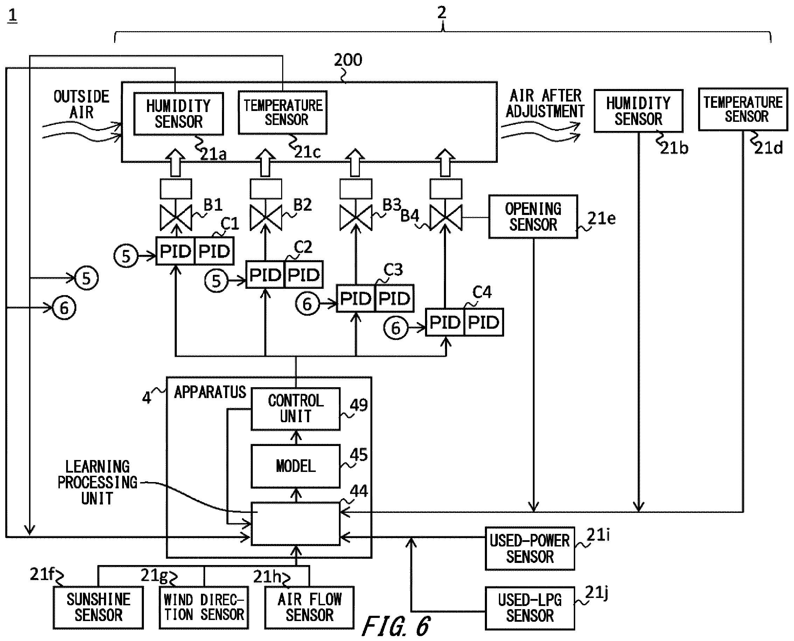

Fig. 4 shows an application example (1) of the system 1. Note that, in Fig. 4 or in Fig. 5 and Fig. 6 described below, a simplified configuration of the apparatus 4 is illustrated.

In the present application example, the facility 2 is an air conditioner for a plant and is configured to take outside air into the duct 200 and supply the air after temperature adjustment and humidity adjustment to compartments of the plant or another air conditioner.

The facility 2 is provided with valves B1 to B4 as devices to be controlled 20 (T). The valve B1 is for adjusting a heating volume in the duct 200, the valve B2 is for adjusting a cooling volume in the duct 200, the valve B3 is for adjusting a humidifying volume in the duct 200, and the valve B4 is for adjusting a dehumidifying volume in the duct 200.

Moreover, the facility 2 is provided with humidity sensors 21a, 21b, temperature sensors 21c, 21d, an opening sensor 21e, a sunshine sensor 21f, a wind direction sensor 21g, an air flow sensor 21h, a used-power sensor 21i, a used-LPG sensor 21j, or the like, as the sensors 21. The humidity sensor 21a and the temperature sensor 21c are configured to measure the humidity and temperature of outside air taken into the duct 200. The humidity sensor 21b and the temperature sensor 21d are configured to measure the humidity and temperature of the air after adjustment discharged from the duct 200. The opening sensor 21e is configured to measure openings (output values) of the valves B1 to B4 respectively. The sunshine sensor 21f, the wind direction sensor 21g, and the air flow sensor 21h are configured to measure a solar irradiance, wind direction, and air flow outside of the plant in which the facility 2 is provided. The used-power sensor 21i is configured to measure a used-power amount of the facility 2. The used-LPG sensor 21j is configured to measure a used-LPG amount of the facility 2.

The learning processing unit 44 of the apparatus 4 is configured to execute a learning processing of the model 45 by using learning data including measurement data measured by the sensors 21a to 21j and a control parameter indicating a control content of each valve B1 to B4. In the present application example, as one example, the control parameter indicates openings as output values of the valves B1 to B4. When the values indicating the openings as the output values are sent as the control parameters from the apparatus 4 via an electrical signal or the like, the valves B1 to B4 open or close to have openings corresponding to the values. The reward value used for the learning processing may be set to 0 when at least one of the temperature or humidity of the air after adjustment is not maintained within a reference range and may be set to have a higher value as the used-power amount and the used-LPG amount is smaller when the temperature and humidity of the air after adjustment are maintained within the reference range respectively.

Moreover, the control unit 49 of the apparatus 4 is configured to acquire recommended control parameters indicating output values of the valves B1 to B4 from the model 45 to control the valves B1 to B4.

According to the application example described above, because the control content indicated by the control parameter is an output value of each device to be controlled 20 (T), the output value of each device to be controlled 20 (T) can be directly controlled.

### [3-2. Application example (2)]

Fig. 5 shows an application example (2) of the system 1.

In the present application example, as one example, the valves B1 to B4 are provided with controllers C1 to C4 for PID control. The controllers C1 to C4 are configured to perform PID control of the valves B1 to B4 concerned so that, in response to respective setting of the temperature and humidity of the air after adjustment as target values (set points), the difference between the target values and the current values (in the present application example, as one example, measured values of the temperature sensor 21c and the humidity sensor 21a) is reduced. Each controller C1 to C4 prestores a value of a proportional gain, a value of an integral gain, and a value of a derivative gain.

The control parameter indicates a target value of PID control of the valves B1 to B4, that is, a temperature and humidity of the air after adjustment. Thus, the learning processing unit 44 of the apparatus 4 is configured to execute a learning processing of the model 45 by using learning data including a control parameter indicating a target value of the PID control of each valve B1 to B4 and measurement data measured by the sensors 21a to 21j. Moreover, the control unit 49 of the apparatus 4 is configured to acquire a recommended control parameter indicating a target value of the PID control of each valve B1 to B4 from the model 45 to control the valves B1 to B4 via the controllers C1 to C4.

According to the application example described above, because the control content indicated by the control parameter is a target value of the PID control of each device to be controlled 20 (T), the target value can be changed each time while performing control of each device to be controlled 20 (T) by the PID control.

Note that, in the present variation, the control parameter may indicate at least one of a value of a proportional gain, a value of an integral gain, or a value of a derivative gain of the PID control. In this case, the gain (in the present application example, the gains used in the controllers C1 to C4) can be change each time while performing control of the device to be controlled by the PID control. Note that the target value may set by an operator accordingly.

### [3-3. Application example (3)]

Fig. 6 shows an application example (3) of the system 1.

In the present application example, as one example, the controllers C1 to C4 of the valves B1 to B4 store two gain sets each including a value of a proportional gain, a value of an integral gain, and a value of a derivative gain, and are configured to perform PID control while switching the gain sets used for the PID control. Each gain set is preassociated with a gain set ID for identifying the gain set.

The control parameter indicates the gain set ID. Thus, the learning processing unit 44 of the apparatus 4 is configured to execute a learning processing of the model 45 by using learning data including a control parameter indicating a gain set ID of the gain set used for the PID control of each valve B1 to B4 and measurement data measured by the sensors 21a to 21j. Moreover, the control unit 49 of the apparatus 4 is configured to acquire a recommended control parameter indicating the gain set ID of the gain set used for the PID control of each valve B1 to B4 from the model 45 to control the valves B1 to B4 via the controllers C1 to C4. For example, the control unit 49 may send the acquired gain set ID to the controllers C1 to C4. Thus, the controllers C1 to C4 determines a gain set corresponding to the received gain set ID and perform the PID control by using each gain value in the gain set.

According to the application example described above, because the control content indicated by the control parameter is a gain set ID of the gain set used for the PID control among the gain set IDs preassociated with each gain set of the PID control, each of the gains can be changed each time collectively while performing control of the device to be controlled 20 (T) by the PID control. Thus, for example, each gain can be changed each time according to a condition at the present time point by prestoring each gain set corresponding to each condition (as one example, each condition of a normal operational condition and an abrupt weather change condition, or the like) in the controllers C1 to C4.

Note that, while in the above-described application examples (1) to (3) the facility 2 is described as an air conditioner for a plant and the devices to be controlled 20 (T) as valves B1 to B4, applicable objects of the system 1 are not limited thereto. For example, the facility 2 may include a tank connected to a plurality of supply conduits and at least one discharge pipe, a valve as the device to be controlled 20 provided in any of the conduits, and a sensor 21 such as a flow rate meter of each conduit or a water level gage of the tank, or the like. In at least some of the plurality of supply conduits, the supply amount may be varied suddenly. In this case, the learning processing unit 44 of the apparatus 4 may execute the learning processing of the model 45 by using learning data including measurement data by the sensor 21 and a control parameter indicating a control content of the valve as the device to be controlled 20 (T). The reward value used for the learning processing may be set to 0 when a water level of the tank or a flow rate of the discharge pipe is not maintained within the reference range and may be increased or decreased according to another measurement data when the water level of the tank or the flow rate of the discharge pipe is maintained within the reference range. The control unit 49 of the apparatus 4 may acquire a recommended control parameter indicating a control content of the valve from the model 45 to control the valve.

### [4. Variation]

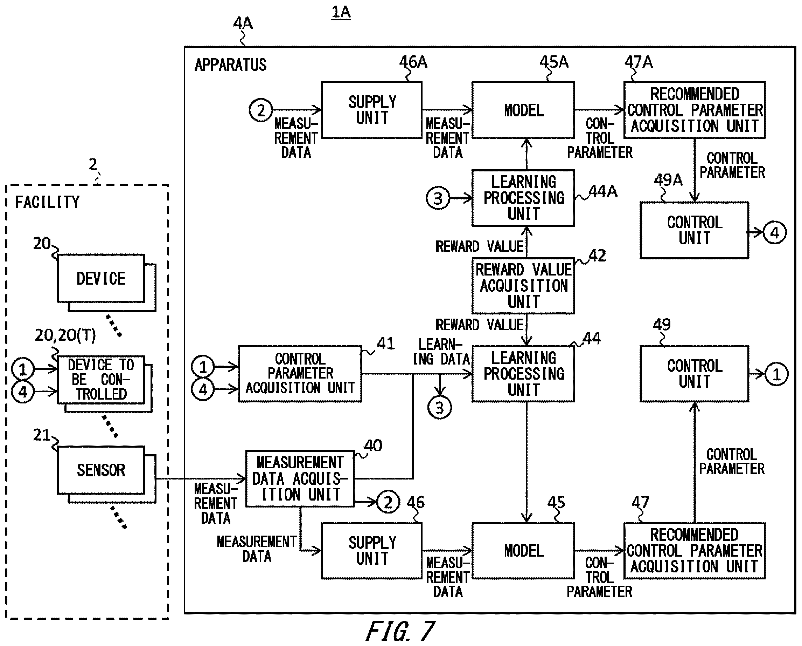

Fig. 7 shows a system 1A according to a variation.

An apparatus 4A of the system 1A further includes a learning processing unit 44A, a model 45A, a supply unit 46A, a recommended control parameter acquisition unit 47A, and a control unit 49A.

The learning processing unit 44A is one example of a second learning processing unit and is configured to execute a learning processing of the model 45A by using learning data including measurement data acquired by the measurement data acquisition unit 40 and a control parameter acquired by the control parameter acquisition unit 41. The learning processing unit 44A may execute the learning processing of the model 45 by using a reward value from the reward value acquisition unit 42. Note that, in the present variation, the measurement data acquisition unit 40 is also one example of a second acquisition unit and is configured to acquire measurement data included in the learning data used for the learning processing of the model 45A.

Each measurement data in the learning data used in the learning processing units 44, 44A may be the same or at least partly different. For example, the sensors 21 that conducted the measurement may be different between the learning data used in the learning processing units 44, 44A. When at least some measurement data are different between the learning data used in the learning processing units 44, 44A, the apparatus 4A may be provided with a measurement data acquisition unit (not shown) for acquiring measurement data to be supplied to the learning processing unit 44A, separately from the measurement data acquisition unit 40 for acquiring measurement data to be supplied to the learning processing unit 44.

The control parameters in the learning data used in the learning processing units 44, 44A may indicate control contents different from each other among a plurality of types of control content of the same device to be controlled 20 (T). For example, when the control parameter in the learning data used in the learning processing unit 44 indicates the first type of control content of the device to be controlled 20 (T), the control parameter in the learning data used in the learning processing unit 44A may indicate the second type of control content of the device to be controlled 20 (T).

In the present embodiment, as one example, the first type of control content may be a gain set ID of a gain set used for feedback control of the device to be controlled 20 (T), or may be at least one of a value of a proportional gain, a value of an integral gain, or a value of a derivative gain of the feedback control. The second type of control content may be a target value of the feedback control.

The model 45A is one example of a second model and is configured to output a recommended control parameter indicating a control content recommended for increasing the reward value in response to input of measurement data. The recommended control parameter outputted from the model 45A may indicate the above-mentioned second type of control content.

The supply unit 46A is one example of a second supply unit and is configured to supply the measurement data acquired by the measurement data acquisition unit 40 to the model 45A.

The recommended control parameter acquisition unit 47A is one example of a second recommended control parameter acquisition unit and is configured to acquire a recommended control parameter outputted from the model 45A in response to supply of measurement data to the model 45A. The recommended control parameter acquisition unit 47A may supply the acquired recommended control parameter to the control unit 49A.

The control unit 49A is one example of a second control unit and is configured to control each device to be controlled 20 (T) by using the recommended control parameter acquired by the recommended control parameter acquisition unit 47A. The control unit 49A may perform control similarly to the control unit 49, except that it uses a recommended control parameter indicating a different type of control content.

According to the system 1A described above, while performing control of the device to be controlled 20 (T) by feedback control using the model 45, each of the gains can be changed each time and a target value of the feedback control can be changed each time by using the model 45A.

### [5. Other variations]

Note that, while the system 1 (or system 1A) is described as including a single apparatus 4 (or apparatus 4A) in the above-described embodiments and variations, it may include a plurality of apparatuses 4 (or apparatuses 4A). In this case, the device to be controlled 20 (T) of each of the apparatuses 4 (or apparatuses 4A) may be the same or different. As one example, the system 1, 1A may include the apparatuses 4, 4A for each device 20, whose device to be controlled 20 (T) is the device 20.

Moreover, while the apparatus 4 is described above as including the control parameter acquisition unit 41, the reward value acquisition unit 42, the learning processing unit 44, the model 45, the supply unit 46, the recommended control parameter acquisition unit 47, and the control unit 49, it may not include at least one of them. When the apparatus 4 does not include the learning processing unit 44, the apparatus 4 may performed control of the device to be controlled 20 (T) by using the model 45 after a learning processing without executing a learning processing of the model 45. When the apparatus 4 does not include the model 45, the model 45 may be stored in a server external to the apparatus 4. When the apparatus 4 does not include the supply unit 46, recommended control parameter acquisition unit 47, or control unit 49, the apparatus 4 may not perform control of the device to be controlled 20 (T) by using the model 45.

Similarly, while the apparatus 4A is described above as including the control parameter acquisition unit 41, the reward value acquisition unit 42, the learning processing units 44, 44A, the models 45, 45A, the supply units 46, 46A, the recommended control parameter acquisition units 47, 47A, and the control units 49, 49A, it may not include at least one of them.

Various embodiments of the present invention may be described with reference to flowcharts and block diagrams whose blocks may represent (1) steps of processes in which operations are performed or (2) units of apparatuses responsible for performing operations. Certain steps and units may be implemented by at least one of dedicated circuitry, programmable circuitry supplied with computer-readable instructions stored on computer-readable media, and processors supplied with computer-readable instructions stored on computer-readable media. Dedicated circuitry may include at least one of digital and analog hardware circuits and may include at least one of integrated circuits (IC) and discrete circuits. Programmable circuitry may include reconfigurable hardware circuits comprising logical AND, OR, XOR, NAND, NOR, and other logical operations, flip-flops, registers, memory elements, etc., such as field-programmable gate arrays (FPGA), programmable logic arrays (PLA), etc.

Computer-readable media may include any tangible device that can store instructions for execution by a suitable device, such that the computer-readable medium having instructions stored therein comprises an article of manufacture including instructions which can be executed to create means for performing operations specified in the flowcharts or block diagrams. Examples of computer-readable media may include an electronic storage medium, a magnetic storage medium, an optical storage medium, an electromagnetic storage medium, a semiconductor storage medium, etc. More specific examples of computer-readable media may include a Floppy (registered trademark) disk, a diskette, a hard disk, a random access memory (RAM), a read-only memory (ROM), an erasable programmable read-only memory (EPROM or Flash memory), an electrically erasable programmable read-only memory (EEPROM), a static random access memory (SRAM), a compact disc read-only memory (CD-ROM), a digital versatile disk (DVD), a BLU-RAY(RTM) disc, a memory stick, an integrated circuit card, etc.

Computer-readable instructions may include assembler instructions, instruction-set-architecture (ISA) instructions, machine instructions, machine dependent instructions, microcode, firmware instructions, state-setting data, or either code or object code written in any combination of one or more programming languages, including an object oriented programming language such as Smalltalk, JAVA (registered trademark), C++, etc., and conventional procedural programming languages, such as the "C" programming language or similar programming languages.

Computer-readable instructions may be provided to a processor of a general purpose computer, special purpose computer, or other programmable data processing apparatus, or to programmable circuitry, locally or via a local area network (LAN), a wide area network (WAN) such as the Internet, etc., to execute the computer-readable instructions to create means for performing operations specified in the flowcharts or block diagrams. Examples of processors include computer processors, processing units, microprocessors, digital signal processors, controllers, microcontrollers, etc.

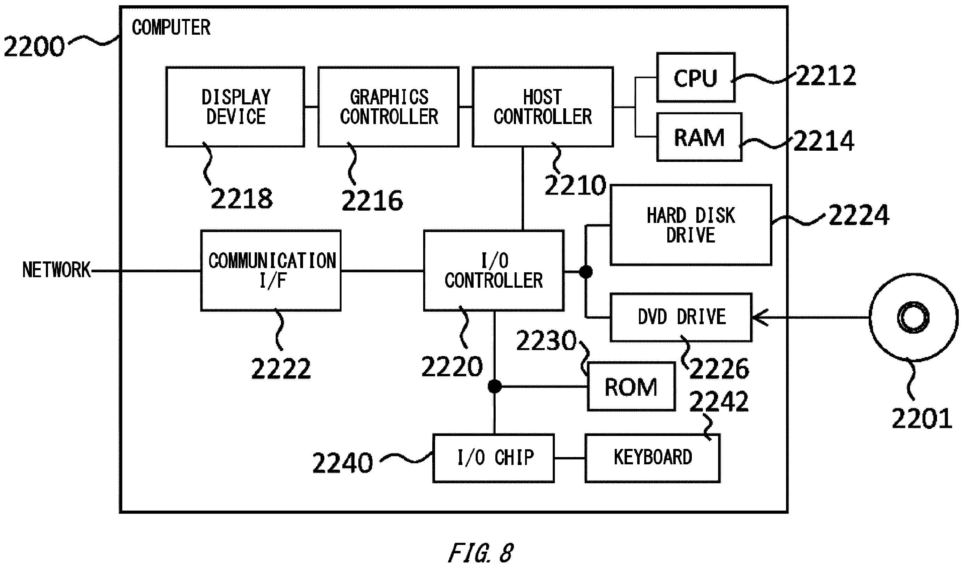

FIG. 8 shows an example of a computer 2200 in which aspects of the present invention may be wholly or partly embodied. A program that is installed in the computer 2200 can cause the computer 2200 to function as or perform operations associated with apparatuses of the embodiments of the present invention or one or more units thereof, and, in addition or instead, cause the computer 2200 to perform processes of the embodiments of the present invention or steps thereof. Such a program may be executed by a CPU 2212 to cause the computer 2200 to perform certain operations associated with some or all of the blocks of flowcharts and block diagrams described herein.

The computer 2200 according to the present embodiment includes the CPU 2212, a RAM 2214, a graphics controller 2216, and a display device 2218, which are mutually connected by a host controller 2210. The computer 2200 also includes input/output units such as a communication interface 2222, a hard disk drive 2224, a DVD-ROM drive 2226, and an IC card drive, which are connected to the host controller 2210 via an input/output controller 2220. The computer also includes legacy input/output units such as a ROM 2230 and a keyboard 2242, which are connected to the input/output controller 2220 through an input/output chip 2240.

The CPU 2212 operates according to programs stored in the ROM 2230 and the RAM 2214, thereby controlling each unit. The graphics controller 2216 obtains image data generated by the CPU 2212 on a frame buffer or the like provided in the RAM 2214 or in itself, and causes the image data to be displayed on the display device 2218.

The communication interface 2222 communicates with other electronic devices via a network. The hard disk drive 2224 stores programs and data used by the CPU 2212 within the computer 2200. The DVD-ROM drive 2226 reads the programs or the data from the DVD-ROM 2201, and provides the hard disk drive 2224 with the programs or the data via the RAM 2214. The IC card drive reads programs and data from an IC card, and, in addition or instead, writes programs and data into the IC card.

The ROM 2230 stores therein at least one of a boot program or the like executed by the computer 2200 at the time of activation, and a program depending on the hardware of the computer 2200. The input/output chip 2240 may also connect various input/output units via a parallel port, a serial port, a keyboard port, a mouse port, and the like to the input/output controller 2220.

A program is provided by computer readable media such as the DVD-ROM 2201 or the IC card. The program is read from the computer readable media, installed into the hard disk drive 2224, RAM 2214, or ROM 2230, which are also examples of computer readable media, and executed by the CPU 2212. The information processing described in these programs is read into the computer 2200, resulting in cooperation between a program and the above-mentioned various types of hardware resources. An apparatus or method may be constituted by realizing the operation or processing of information in accordance with the usage of the computer 2200.

For example, when communication is performed between the computer 2200 and an external device, the CPU 2212 may execute a communication program loaded onto the RAM 2214 to instruct communication processing to the communication interface 2222, based on the processing described in the communication program. The communication interface 2222, under control of the CPU 2212, reads transmission data stored on a transmission buffering region provided in a recording medium such as the RAM 2214, the hard disk drive 2224, the DVD-ROM 2201, or the IC card, and transmits the read transmission data to a network or writes reception data received from a network to a reception buffering region or the like provided on the recording medium.

In addition, the CPU 2212 may cause all or a necessary portion of a file or a database to be read into the RAM 2214, the file or the database having been stored in an external recording medium such as the hard disk drive 2224, the DVD-ROM drive 2226 (DVD-ROM 2201), the IC card, etc., and perform various types of processing on the data on the RAM 2214. The CPU 2212 may then write back the processed data to the external recording medium.

Various types of information, such as various types of programs, data, tables, and databases, may be stored in the recording medium to undergo information processing. The CPU 2212 may perform various types of processing on the data read from the RAM 2214, which includes various types of operations, processing of information, condition judging, conditional branch, unconditional branch, search, replace of information, etc., as described throughout this disclosure and designated by an instruction sequence of programs, and writes the result back to the RAM 2214. In addition, the CPU 2212 may search for information in a file, a database, etc., in the recording medium. For example, when a plurality of entries, each having an attribute value of a first attribute associated with an attribute value of a second attribute, are stored in the recording medium, the CPU 2212 may search for an entry matching the condition whose attribute value of the first attribute is designated, from among the plurality of entries, and read the attribute value of the second attribute stored in the entry, thereby obtaining the attribute value of the second attribute associated with the first attribute satisfying the predetermined condition.

The above-explained program or software modules may be stored in the computer readable media on the computer 2200 or near the computer 2200. In addition, a recording medium such as a hard disk or a RAM provided in a server system connected to a dedicated communication network or the Internet can be used as the computer readable media, thereby providing the program to the computer 2200 via the network.

While the present invention has been described above by way of the embodiments, the technical scope of the present invention is not limited to the range described in the above-mentioned embodiments. It is obvious to those skilled in the art that various alterations and modifications may be made to the above-mentioned embodiments.

### EXPLANATION OF REFERENCES

1: system, 2: facility, 4: apparatus, 20: device, 21: sensor, 40: measurement data acquisition unit, 41: control parameter acquisition unit, 42: reward value acquisition unit, 44: learning processing unit, 45: model, 46: supply unit, 47: recommended control parameter acquisition unit, 49: control unit, 200: duct, 2200: computer, 2201: DVD-ROM, 2210: host controller, 2212: CPU, 2214: RAM, 2216: graphics controller, 2218: display device, 2220: input/output controller, 2222: communication interface, 2224: hard disk drive, 2226: DVD-ROM drive, 2230: ROM, 2240: input/output chip, 2242: keyboard

## Claims

1. An apparatus (4) for a learning processing comprising:
a first acquisition unit (40) for acquiring measurement data measured by a sensor (21);
a control parameter acquisition unit (41) configured to acquire a control parameter indicating a control content of each device to be controlled (20, 20(T));
a reward value acquisition unit (42) configured to acquire a reward value used for reinforcement learning in the learning processing unit (44), wherein the reward value is determined by a preset reward function in response to input of the measurement data;
a first model (45) configured to output a recommended control parameter indicating a first type of control content recommended for increasing the reward value in response to input of the measurement data;
a first learning processing unit (44) configured to execute a learning processing of the first model (45) by using the reward value and by using learning data including the measurement data acquired by the first acquisition unit (40) and the control parameter acquired by the control parameter acquisition unit (41);
a first recommended control parameter acquisition unit (47) for acquiring the recommended control parameter output from the first model (45) in response to the supply of the measurement data to the first model (45); and
a first control unit (49) for controlling at least one device to be controlled (20(T)) by using the recommended control parameter acquired by the first recommended control parameter acquisition unit (47);
**characterized in**
**that** the first acquisition unit (40) is further configured to acquire each of a first group of measurement data including at least one type of measurement data and a second group of measurement data including at least one type of measurement data;
and in that the reward function used in the first learning processing unit (44) is configured to:
set the reward value to 0 when at least one of the first group of the measurement data does not satisfy a reference condition, and
increase or decrease the reward value according to each value of the second group of the measurement data when each of the first group of the measurement data satisfies the reference condition.

2. The apparatus (4) according to claim 1, further comprising:
a first supply unit (46) for supplying the measurement data acquired by the first acquisition unit (40) to the first model (45).

3. The apparatus (4) according to claim 1 or 2, the first type of control content is an output value of each device to be controlled (20(T)).

4. The apparatus (4) according to any one of claims 1 to 3, the first acquisition unit (40) is configured to acquire the measurement data indicating a physical quantity acting as a disturbance to the at least one device (20, 20(T)) to be controlled.

5. The apparatus (4) according to any one of claims 1 to 4, wherein the first acquisition unit (40) is configured to acquire the measurement data indicating a consumption of at least one of energy or raw material by a facility including the at least one device to be controlled (20, 20(T)).

6. A system (1) comprising:
a plurality of devices to be controlled (20, 20(T));
at least one sensor (21);
at least one controller (C1, C2, C3, C4) for performing feedback control of the devices to be controlled (20, 20(T)); and
the apparatus according to any of claims 1 or 2.

7. The system (1) according to claim 6, wherein each device to be controlled (20, 20(T)) is controlled by any feedback control of P control, PI control, PD control, and PID control, wherein the first type of control content is a target value of the feedback control.

8. The system (1) according to claim 6,
wherein each device to be controlled (20, 20(T)) is controlled by any feedback control of PI control, PD control, and PID control, and
wherein the first type of control content is a piece of identification information of a gain set used for the feedback control among pieces of identification information preassociated with each gain set including a value of a proportional gain and at least one of a value of an integral gain or a value of a derivative gain of the feedback control.

9. The system (1) according to claim 6,
wherein each device to be controlled (20, 20(T)) is controlled by any feedback control of P control, PI control, PD control, and PID control,
wherein the first type of control content is at least one of a value of a proportional gain, a value of an integral gain, or a value of a derivative gain of the feedback control.

10. The system (1) according to claim 8 or 9,
the apparatus further comprising:
a second acquisition unit (40) for acquiring measurement data measured by a sensor (21);
a second model (45A) configured to output a recommended control parameter indicating the second type of control content recommended for increasing the reward value in response to input of measurement data, wherein the second type of control content is a target value of the feedback control;
a second learning processing unit (44A) configured to execute a learning processing of the second model (45A) by using the reward value and by using learning data including the measurement data acquired by the second acquisition unit (40) and the control parameter indicating the second type of control content of the at least one device to be controlled (20, 20(T)).

11. The system (1) according to claim 10,
the apparatus further comprising:
a second supply unit (46A) for supplying the measurement data acquired by the second acquisition unit (40) to the second model (45A),
a second recommended control parameter acquisition unit (47A) for acquiring the recommended control parameter output from the second model (45A) in response to the supply of the measurement data to the second model (45A), and
a second control unit (49) for controlling the at least one device to be controlled (20, 20(T)) by using the recommended control parameter acquired by the second recommended control parameter acquisition unit (47A).

12. A method for a learning processing comprising:
acquiring (S11, S17), by a first acquisition unit (40), measurement data measured by a sensor (21);
acquiring (S13), by a control parameter acquisition unit (41), a control parameter indicating a control content of each device to be controlled (20, 20(T));
outputting (S15), by a first model (45), a recommended control parameter indicating the first type of control content recommended for increasing a reward value in response to input of measurement data;
controlling (S15), by a first control unit (49), the at least one device to be controlled (20(T)) by using the recommended control parameter;
acquiring (S19), by a reward value acquisition unit (42), a reward value used for reinforcement learning in the learning processing unit (44), wherein the reward value is determined by a preset reward function in response to input of the measurement data;
executing (S23), by a first learning processing unit (44), a learning processing of the first model (45) by using the reward value and by using learning data including the measurement data acquired by the first acquisition unit (40) and the control parameter acquired by the control parameter acquisition unit (41);
**characterized in**
further acquiring, by the first acquisition unit (40), each of a first group of measurement data including at least one type of measurement data and a second group of measurement data including at least one type of measurement data;
and **in that** the reward function used in the first learning processing unit (44) is configured to:
set the reward value to 0 when at least one of the first group of the measurement data does not satisfy a reference condition, and
increase or decrease the reward value according to each value of the second group of the measurement data when each of the first group of the measurement data satisfies the reference condition.

13. A program comprising instructions which, when the program is executed by the apparatus according to any of the claims 1-5, cause the apparatus to carry out the method of claim 12.

## Patentansprüche

1. Vorrichtung (4) für eine Lernverarbeitung, die aufweist:
eine erste Beschaffungseinheit (40) zum Beschaffen von Messdaten, die von einem Sensor (21) gemessen werden;
eine Steuerparameterbeschaffungseinheit (41), die ausgelegt ist, einen Steuerparameter zu beschaffen, der einen Steuerinhalt einer jeweiligen zu steuernden Vorrichtung (20, 20(T)) angibt;
eine Belohnungswertbeschaffungseinheit (42), die ausgelegt ist, einen Belohnungswert zu beschaffen, der zum Verstärkungslernen in der Lernverarbeitungseinheit (44) verwendet wird, wobei der Belohnungswert durch eine voreingestellte Belohnungsfunktion als Reaktion auf eine Eingabe der Messdaten bestimmt wird;
ein erstes Modell (45), das ausgelegt ist, als Reaktion auf eine Eingabe der Messdaten einen empfohlenen Steuerparameter auszugeben, der einen ersten Typ eines Steuerinhaltes, der zum Erhöhen des Belohnungswertes empfohlen wird, angibt;
eine erste Lernverarbeitungseinheit (44), die ausgelegt ist, eine Lernverarbeitung des ersten Modells (45) unter Verwendung des Belohnungswertes und unter Verwendung von Lerndaten, die die von der ersten Beschaffungseinheit (40) beschafften Messdaten und den von der Steuerparameterbeschaffungseinheit (41) beschafften Steuerparameter enthalten, auszuführen;
eine erste Empfehlungssteuerparameterbeschaffungseinheit (47) zum Beschaffen des empfohlenen Steuerparameters, der von dem ersten Modell (45) als Reaktion auf die Zufuhr der Messdaten zu dem ersten Modell (45) ausgegeben wird; und
eine erste Steuerungseinheit (49) zum Steuern mindestens einer zu steuernden Vorrichtung (20(T)) unter Verwendung des empfohlenen Steuerparameters, der durch die erste Empfehlungssteuerparameterbeschaffungseinheit (47) beschafft wird;
**dadurch gekennzeichnet,**
**dass** die erste Beschaffungseinheit (40) außerdem ausgelegt ist, eine erste Gruppe von Messdaten, die mindestens einen Typ von Messdaten enthalten, und eine zweite Gruppe von Messdaten, die mindestens einen Typ von Messdaten enthalten, zu beschaffen;
und **dass** die Belohnungsfunktion, die in der ersten Lernverarbeitungseinheit (44) verwendet wird, ausgelegt ist:
den Belohnungswert auf 0 einzustellen, wenn mindestens ein Messdatum aus der ersten Gruppe eine Referenzbedingung nicht erfüllt, und
den Belohnungswert entsprechend einem jeweiligen Wert der zweiten Gruppe der Messdaten zu erhöhen oder zu verringern, wenn alle Messdaten der ersten Gruppe die Referenzbedingung erfüllen.

2. Vorrichtung (4) nach Anspruch 1, die außerdem aufweist:
eine erste Zufuhreinheit (46) zum Zuführen der Messdaten, die von der ersten Beschaffungseinheit (40) beschafft werden, zu dem ersten Modell (45).

3. Vorrichtung (4) nach Anspruch 1 oder 2, wobei der erste Typ von Steuerinhalt ein Ausgangswert einer jeweiligen zu steuernden Vorrichtung (20(T)) ist.

4. Vorrichtung (4) nach einem der Ansprüche 1 bis 3, wobei die erste Beschaffungseinheit (40) ausgelegt ist, die Messdaten zu beschaffen, die eine physikalische Größe angeben, die als eine Störung für die mindestens eine zu steuernde Vorrichtung (20, 20(T)) wirkt.

5. Vorrichtung (4) nach einem der Ansprüche 1 bis 4, wobei die erste Beschaffungseinheit (40) ausgelegt ist, die Messdaten zu beschaffen, die einen Verbrauch einer Energie oder eines Rohmaterials von einer Einrichtung angeben, die die mindestens eine zu steuernde Vorrichtung (20, 20(T)) enthält.

6. System (1), das aufweist:
mehrere zu steuernde Vorrichtungen (20, 20(T));
mindestens einen Sensor (21);
mindestens eine Steuerung (C1, C2, C3, C4) zum Durchführen einer Rückkopplungssteuerung der zu steuernden Vorrichtungen (20, 20(T)); und
die Vorrichtung nach einem der Ansprüche 1 oder 2.

7. System (1) nach Anspruch 6, wobei jede zu steuernde Vorrichtung (20, 20(T)) durch irgendeine Rückkopplungssteuerung aus einer P-Regelung, einer PI-Regelung, einer PD-Regelung und einer PID-Regelung gesteuert wird, wobei der erste Typ von Steuerinhalt ein Sollwert der Rückkopplungssteuerung ist.

8. System (1) nach Anspruch 6,
wobei jede zu steuernde Vorrichtung (20, 20(T)) durch irgendeine Rückkopplungssteuerung aus einer PI-Regelung, einer PD-Regelung und einer PID-Regelung gesteuert wird, und
wobei der erste Typ von Steuerinhalt ein Identifikationsinformationsteil eines Verstärkungssatzes, der für die Rückkopplungssteuerung verwendet wird, unter Identifikationsinformationsteilen ist, die einem jeweiligen Verstärkungssatz im Voraus zugeordnet sind, der einen Wert einer Proportional-Verstärkung und mindestens einen Wert einer Integral-Verstärkung oder einen Wert einer Differential-Verstärkung der Rückkopplungssteuerung enthält.

9. System (1) nach Anspruch 6,
wobei jede zu steuernde Vorrichtung (20, 20(T)) durch irgendeine Rückkopplungssteuerung aus einer P-Regelung, einer PI-Regelung, einer PD-Regelung und einer PID-Regelung gesteuert wird,
wobei der erste Typ von Steuerinhalt mindestens ein Wert aus einem Wert einer Proportional-Verstärkung, einem Wert einer Integral-Verstärkung und einem Wert einer Differential-Verstärkung der Rückkopplungssteuerung ist.

10. System (1) nach Anspruch 8 oder 9,
wobei die Vorrichtung außerdem aufweist:
eine zweite Beschaffungseinheit (40) zum Beschaffen von Messdaten, die von einem Sensor (21) gemessen werden;
ein zweites Modell (45A), das ausgelegt ist, als Reaktion auf eine Eingabe von Messdaten einen empfohlenen Steuerparameter auszugeben, der den zweiten Typ von Steuerinhalt angibt, der zum Erhöhen des Belohnungswertes empfohlen wird, wobei der zweite Typ von Steuerinhalt ein Sollwert der Rückkopplungssteuerung ist;
eine zweite Lernverarbeitungseinheit (44A), die ausgelegt ist, eine Lernverarbeitung des zweiten Modells (45A) unter Verwendung des Belohnungswertes und unter Verwendung von Lerndaten auszuführen, die die von der zweiten Beschaffungseinheit (40) beschafften Messdaten und den Steuerparameter, der den zweiten Typ von Steuerinhalt der mindestens einen zu steuernden Vorrichtung (20, 20(T)) angibt, enthalten.

11. System (1) nach Anspruch 10,
wobei die Vorrichtung außerdem aufweist:
eine zweite Zufuhreinheit (46A) zum Zuführen der Messdaten, die von der zweiten Beschaffungseinheit (40) beschafft werden, zu dem zweiten Modell (45A),
eine zweite Empfehlungssteuerparameterbeschaffungseinheit (47A) zum Beschaffen des empfohlenen Steuerparameters, der von dem zweiten Modell (45A) ausgegeben wird, als Reaktion auf die Zufuhr der Messdaten zu dem zweiten Modell (45A), und
eine zweite Steuerungseinheit (49) zum Steuern der mindestens einen zu steuernden Vorrichtung (20, 20(T)) unter Verwendung des von der zweiten Empfehlungssteuerparameterbeschaffungseinheit (47A) beschafften empfohlenen Steuerparameters.

12. Verfahren für eine Lernverarbeitung, das aufweist:
Beschaffen (S11, S17) von Messdaten, die von einem Sensor (21) gemessen werden, durch eine erste Beschaffungseinheit (40);
Beschaffen (S13) eines Steuerparameters, der einen Steuerinhalt einer jeweiligen zu steuernden Vorrichtung (20, 20(T)) angibt, durch eine Steuerparameterbeschaffungseinheit (41);
Ausgeben (S15) eines empfohlenen Steuerparameters durch ein erstes Modell (45), das den ersten Typ von Steuerinhalt angibt, der zum Erhöhen eines Belohnungswertes empfohlen wird, als Reaktion auf eine Eingabe von Messdaten;
Steuern (S15) der mindestens einen zu steuernden Vorrichtung (20(T)) durch eine erste Steuerungseinheit (49) unter Verwendung des empfohlenen Steuerparameters;
Beschaffen (S19) eines Belohnungswertes durch eine Belohnungswertbeschaffungseinheit (42), der zum Verstärkungslernen in der Lernverarbeitungseinheit (44) verwendet wird, als Reaktion auf eine Eingabe der Messdaten, wobei der Belohnungswert durch eine voreingestellte Belohnungsfunktion bestimmt wird;
Ausführen (S23) einer Lernverarbeitung des ersten Modells (45) durch eine erste Lernverarbeitungseinheit (44) unter Verwendung des Belohnungswertes und unter Verwendung von Lerndaten, die die von der ersten Beschaffungseinheit (40) beschafften Messdaten und den von der Steuerparameterbeschaffungseinheit (41) beschafften Steuerparameter enthalten;
**gekennzeichnet durch**
außerdem Beschaffen einer ersten Gruppe von Messdaten, die mindestens einen Typ von Messdaten enthalten, und einer zweiten Gruppe von Messdaten, die mindestens einen Typ von Messdaten enthalten, **durch** die erste Beschaffungseinheit (40);
wobei die Belohnungsfunktion, die in der ersten Lernverarbeitungseinheit (44) verwendet wird, ausgelegt ist,
den Belohnungswert auf 0 einzustellen, wenn mindestens ein Messdatum der ersten Gruppe eine Referenzbedingung nicht erfüllt, und
den Belohnungswert entsprechend einem jeweiligen Wert der zweiten Gruppe der Messdaten zu erhöhen oder zu verringern, wenn alle Messdaten der ersten Gruppe die Referenzbedingung erfüllen.

13. Programm, das Anweisungen aufweist, die, wenn das Programm von der Vorrichtung nach einem der Ansprüche 1 bis 5 ausgeführt wird, bewirken, dass die Vorrichtung das Verfahren nach Anspruch 12 ausführt.

## Revendications

1. Appareil (4) pour un traitement d'apprentissage comprenant :
une première unité d'acquisition (40) pour l'acquisition de données de mesure mesurées par un capteur (21) ;
une unité d'acquisition de paramètre de commande (41) configurée pour acquérir un paramètre de commande indiquant un contenu de commande de chaque dispositif à commander (20, 20(T)) ;
une unité d'acquisition de valeur de récompense (42) configurée pour acquérir une valeur de récompense utilisée pour l'apprentissage par renforcement dans l'unité de traitement d'apprentissage (44), dans lequel la valeur de récompense est déterminée par une fonction de récompense prédéfinie en réponse à l'entrée des données de mesure ;
un premier modèle (45) configuré pour délivrer en sortie un paramètre de commande recommandé indiquant un premier type de contenu de commande recommandé pour augmenter la valeur de récompense en réponse à l'entrée des données de mesure ;
une première unité de traitement d'apprentissage (44) configurée pour exécuter un traitement d'apprentissage du premier modèle (45) en utilisant la valeur de récompense et en utilisant des données d'apprentissage comprenant les données de mesure acquises par la première unité d'acquisition (40) et le paramètre de commande acquis par l'unité d'acquisition de paramètre de commande (41) ;
une première unité d'acquisition de paramètre de commande recommandés (47) pour acquérir la sortie de paramètre de commande recommandés du premier modèle (45) en réponse à la fourniture des données de mesure au premier modèle (45) ; et
une première unité de commande (49) pour commander au moins un dispositif à commander (20(T)) en utilisant le paramètre de commande recommandé acquis par la première unité d'acquisition de paramètre de commande recommandé (47) ;
**caractérisé en ce que**
la première unité d'acquisition (40) est en outre configurée pour acquérir chacun d'un premier groupe de données de mesure comprenant au moins un type de données de mesure et un second groupe de données de mesure comprenant au moins un type de données de mesure ;
et que la fonction de récompense utilisée dans la première unité de traitement d'apprentissage (44) est configurée pour :
fixer la valeur de récompense à 0 lorsqu'au moins un des premiers groupes de données de mesure ne satisfait pas à une condition de référence, et
augmenter ou diminuer la valeur de récompense en fonction de chaque valeur du second groupe de données de mesure lorsque chacune des données du premier groupe de données de mesure satisfait à la condition de référence.

2. Appareil (4) selon la revendication 1, comprenant en outre :
une première unité d'alimentation (46) pour fournir les données de mesure acquises par la première unité d'acquisition (40) au premier modèle (45).

3. Appareil (4) selon la revendication 1 ou 2, le premier type de contenu de commande est une valeur de sortie de chaque dispositif à commander (20(T)).

4. Appareil (4) selon l'une quelconque des revendications 1 à 3, la première unité d'acquisition (40) est configurée pour acquérir les données de mesure indiquant une quantité physique agissant comme une perturbation sur ledit au moins un dispositif (20, 20(T)) à commander.

5. Appareil (4) selon l'une quelconque des revendications 1 à 4, dans lequel la première unité d'acquisition (40) est configurée pour acquérir les données de mesure indiquant une consommation d'au moins une énergie ou d'une matière première par une installation comprenant ledit au moins un dispositif à commander (20, 20(T)).

6. Système (1) comprenant :
une pluralité de dispositifs à commander (20, 20(T)) ;
au moins un capteur (21) ;
au moins un dispositif de commande (C1, C2, C3, C4) pour effectuer une commande à rétroaction des dispositifs à commander (20, 20(T)) ; et
l'appareil selon l'une quelconque des revendications 1 ou 2.

7. Système (1) selon la revendication 6, dans lequel chaque dispositif à commander (20, 20(T)) est commandé par une commande à rétroaction parmi une commande P, une commande PI, une commande PD et une commande PID, dans lequel le premier type de contenu de commande est une valeur cible de la commande à rétroaction.

8. Système (1) selon la revendication 6,
dans lequel chaque dispositif à commander (20, 20(T)) est commandé par une commande à rétroaction parmi la commande PI, la commande PD et la commande PID, et
dans lequel le premier type de contenu de commande est une information d'identification d'un ensemble de gains utilisé pour la commande à rétroaction parmi l'information d'identification pré-associée à chaque ensemble de gains comprenant une valeur de gain proportionnel et au moins une valeur de gain intégral ou une valeur de gain dérivé de la commande à rétroaction.

9. Système (1) selon la revendication 6,
dans lequel chaque dispositif à commander (20, 20(T)) est commandé par une commande à rétroaction parmi la commande P, la commande PI, la commande PD et la commande PID,
dans lequel le premier type de contenu de commande est au moins un des éléments suivants : une valeur d'un gain proportionnel, une valeur d'un gain intégral ou une valeur d'un gain dérivé de la commande à rétroaction.

10. Système (1) selon la revendication 8 ou 9,
l'appareil comprend en outre :
une seconde unité d'acquisition (40) pour l'acquisition de données de mesure mesurées par un capteur (21) ;
un second modèle (45A) configuré pour délivrer en sortie un paramètre de commande recommandé indiquant le second type de contenu de commande recommandé pour augmenter la valeur de récompense en réponse à l'entrée des données de mesure, dans lequel le second type de contenu de commande est une valeur cible de la commande à rétroaction ;
une seconde unité de traitement d'apprentissage (44A) configurée pour exécuter un traitement d'apprentissage du second modèle (45A) en utilisant la valeur de récompense et en utilisant des données d'apprentissage comprenant les données de mesure acquises par la seconde unité d'acquisition (40) et le paramètre de commande indiquant le deuxième type de contenu de commande d'au moins un dispositif à commander (20, 20(T)).

11. Système (1) selon la revendication 10,
l'appareil comprend en outre :
une seconde unité d'alimentation (46A) pour fournir les données de mesure acquises par la deuxième unité d'acquisition (40) au second modèle (45A),
une seconde unité d'acquisition de paramètre de commande recommandés (47A) pour acquérir la sortie de paramètre de commande recommandés du second modèle (45A) en réponse à la fourniture des données de mesure au second modèle (45A), et
une seconde unité de commande (49) pour commander ledit au moins un dispositif à commander (20, 20(T)) en utilisant le paramètre de commande recommandé acquis par la seconde unité d'acquisition de paramètre de commande recommandés (47A).

12. Procédé de traitement d'apprentissage comprenant les étapes consistant à :
acquérir (S11, S17), par une première unité d'acquisition (40), des données de mesure mesurées par un capteur (21) ;
acquérir (S13), par une unité d'acquisition de paramètre de commande (41), un paramètre de commande indiquant un contenu de commande de chaque dispositif à commander (20, 20(T)) ;
délivrer en sortie (S15), par un premier modèle (45), un paramètre de commande recommandé indiquant le premier type de contenu de commande recommandé pour augmenter une valeur de récompense en réponse à l'entrée de données de mesure ;
commander (S15), par une première unité de commande (49), ledit au moins un dispositif à commander (20(T)) en utilisant le paramètre de commande recommandé ;
acquérir (S19), par une unité d'acquisition de valeur de récompense (42), une valeur de récompense utilisée pour l'apprentissage par renforcement dans l'unité de traitement d'apprentissage (44), dans lequel la valeur de récompense est déterminée par une fonction de récompense prédéfinie en réponse à l'entrée des données de mesure ;
exécuter (S23), par une première unité de traitement d'apprentissage (44), un traitement d'apprentissage du premier modèle (45) en utilisant la valeur de récompense et en utilisant des données d'apprentissage comprenant les données de mesure acquises par la première unité d'acquisition (40) et le paramètre de commande acquis par l'unité d'acquisition de paramètre de commande (41) ;
**caractérisé par**
acquérir en outre, par la première unité d'acquisition (40), chacun d'un premier groupe de données de mesure comprenant au moins un type de données de mesure et un second groupe de données de mesure comprenant au moins un type de données de mesure ;
et en ce que la fonction de récompense utilisée dans la première unité de traitement d'apprentissage (44) est configurée pour :
fixer la valeur de récompense à 0 lorsqu'au moins un des premiers groupes de données de mesure ne satisfait pas à une condition de référence, et
augmenter ou diminuer la valeur de récompense en fonction de chaque valeur du second groupe de données de mesure lorsque chacune des données du premier groupe de données de mesure satisfait à la condition de référence.

13. Programme comprenant des instructions qui, lorsque le programme est exécuté par l'appareil selon l'une quelconque des revendications 1 à 5, amènent l'appareil à mettre en oeuvre le procédé de la revendication 12.
